# EUROPEAN PATENT SPECIFICATION

(11) **EP 3 013 772 B1**
(45) Date of publication and mention of the grant of the patent: **13.03.2019**
(21) Application number: 13745470.8
(22) Date of filing: 28.06.2013
(51) Int. Cl.: C05D 1/02, C05D 5/00, C05G 3/00

(54) **PROCESS FOR THE MANUFACTURE OF GRANULATES CONTAINING POTASSIUM CHLORIDE AND MAGNESIUM SULPHATE HYDRATE**
VERFAHREN ZUR HERSTELLUNG VON GRANULATEN MIT KALIUMCHLORID UND MAGNESIUMSULFATHYDRAT
PROCÉDÉ POUR LA FABRICATION DE GRANULATS CONTENANT DU CHLORURE DE POTASSIUM ET DU SULFATE DE MAGNÉSIUM HYDRATÉ

(43) Date of publication of application: 04.05.2016
(73) Proprietor: K+S Aktiengesellschaft, 34131 Kassel (DE)
(72) Inventor: BAUCKE, Guido, 36277 Schenklengsfeld OT Wippershain (DE); DRESSEL, Stefan, 34130 Kassel (DE); KLEINE-KLEFFMANN, Ulrich, 36251 Bad Hersfeld (DE); ANDRES, Ernst, 34128 Kassel (DE)
(86) International application number: PCT/IB2013/001382
(87) International publication number: WO 2014/207495

(56) References cited:
- EP-A2- 1 048 634
- DE-A1-102006 034 621
- DE-C1- 4 303 985
- US-A- 3 794 478
- US-A- 3 926 609

## Description

The invention at hand concerns processes for the formation of granulates of salt mixtures containing potassium chloride and at least one magnesium sulphate hydrate, according to claim 1, the salt mixtures having a potassium content, calculated as K₂O, of 35 to 50 Wt.% and a magnesium content, calculated as MgO, of 2 to 10 Wt.%, with reference to the granulate in each case.

Mixtures of potassium chloride and hydrates of magnesium sulphate find widespread utilization in agriculture as combined potassium and magnesium fertilizers, in particular since both salts are completely water-soluble and thus, after application of the fertilizer, are rapidly available to the plant and can be taken up directly by the plant. Particularly well-proven are mixtures consisting of potassium chloride, kieserite and possibly sodium chloride, with a potassium content of 35 to 50 Wt.%, e.g. about 40 Wt.%, a water-soluble magnesium content of 2 to 10 Wt.%, e.g. about 6 Wt.%, and a sodium content of 0.0 to 10.0 Wt.%, calculated as K₂O, MgO (water-soluble) and Na₂O.

Mineral fertilizers are frequently employed as granulate, since they exhibit useful handling qualities in this form. Thus granulates tend to dust formation to a very much less degree in comparison with the corresponding finely comminuted mineral fertilizers, they are more storage-stable and can be applied more easily and more uniformly through dispersion.

Known processes for the granulation of salt mixtures are pressure agglomeration, build-up agglomeration and similar processes where solid particles are agglomerated into particles of increasing particle size. The latter can be liquid or solid substances whose adhesive strength makes the particles cohere. The use of such binders is called for if the granulation of the particles does not lead to an adequately stable granular material.. Known binding agents are e.g. gelatin, starch, lignosulphonate, lime and molasses. The selection of the binding agent can decisively influence the properties of the agglomerates, in particular their mechanical strength (abrasion, hardness), hygroscopic stability and tendency to dust formation.

Granulations of mixtures of potassium chloride and magnesium sulphate containing salts are known from the state of the art. Thus DE 1 183 058 discloses the build-up agglomeration of potassium chloride with almost completely thermally dehydrated kieserite in the presence of water. In DE 2 316 701 and US3926609 the granulation of potassium chloride, potassium sulphate and moist, hot langbeinite (K₂SO₄ · 2 MgSO₄) are likewise described by build-up agglomeration. In both cases, however, granulates are obtained which do not correspond to present quality requirements and in particular are not provided with sufficient stability.

Additionally known from EP 1 219 581 are granulations of kieserite to which can be added comparably small quantities of potassium chloride, in the presence of chelating agents based on carboxylic acids, such as citrates for example. The formation of granulates from salt mixtures, whose composition corresponds even only approximately to the invention-related salt composition, however, is not disclosed.

The use of organic binding agents in the granulation produces leads to advantages with regard to the stability of the granulates. However, binding agents can influence other properties disadvantageously and represent a not unimportant factor in regard to costs.

The invention is based on the technical problem to provide a process for the granulation of salt mixtures from potassium chloride and magnesium sulphate hydrates, in particular kieserite or synthetically-manufactured magnesium sulphate hydrate, with the aforementioned potassium and magnesium contents, preferably without the use of organic binding agents. The main constituents of the synthetic magnesium sulphate hydrate (SMS) are magnesium-sulphate monohydrate and/or magnesium sulphate 5/4-hydrate and possibly further hydrates or mixtures of them.

The granulates produced using this process should possess an improved mechanical stability and be characterized in particular by a high breaking strength and low abrasion. Furthermore, the availability of the magnesium of the granulates to the plant should be improved with respect to granulates manufactured with processes which are state of the art of the technology, where often a larger part of the magnesium content, in particular in case of synthetically-manufactured magnesium sulphate monohydrate and 5/4-hydrate, does not dissolve well in water.

It was surprisingly found that the technical problem is solved by granulation of a salt mixture, basically consisting of potassium chloride and magnesium sulphate-hydrate and, if applicable, one or more salts chosen from sodium chloride, sodium sulphate, magnesite and magnesium oxide (e. g. calcined magnesite), with a potassium content of 35 to 50 Wt.% and a magnesium content of 2 to 10 Wt.%, calculated as K₂O and MgO resp., according to the method of press agglomeration, where water is added to the salt mixture before or during the press agglomeration, where the total amount of magnesium sulphate hydrate, potassium chloride and, if applicable, sodium chloride, sodium sulphate or magnesite or magnesium oxide constitutes at least 95 Wt.%, of the salt mixture, and where the quantity of added water is in the range from 0.1 to 30 mL per kg of the salt mixture. The granulates obtained in this way have the required good stability characteristics, in particular good mechanical stability such as breaking strength and/or low abrasion.

The subject of the invention is therefore a process for the manufacture of granulates from a salt mixture, which basically consists (i.e. at least 90 Wt.%) of potassium chloride, magnesium sulphate hydrate and possibly one or more further salts, selected from sodium chloride, sodium sulphate, magnesite, or magnesium oxide preferably as calcined magnesite, in which the potassium content, calculated as K₂O, has a value in the range from 35 to 50 Wt.% and the content of water-soluble magnesium, calculated as MgO (water-soluble), has a value in the range from 2 to 10 Wt.%, with reference to the total weight of the salt mixture in each case. The process according to the invention includes the granulation of the salt mixture according to the method of press agglomeration, which is according to the invention carried out in the presence of water as described in claim 1.

In this connection, the phrase "basically consists of' means that the total amount of magnesium sulphate hydrate, potassium chloride and, if applicable, sodium chloride, sodium sulphate or magnesite or magnesium oxide, preferably as calcined magnesite, constitutes at least 95 Wt.%, in particular at least 99 Wt.%, of the salt mixture.

The water-soluble magnesium content of the granulate or the salt mixture mainly originates in the magnesium sulphate hydrate while magnesite and magnesium oxide, preferably as calcined magnesite, are mainly or completely water-insoluble.

The press agglomeration according to the invention is carried out in the presence of water. The amount of water required to achieve stable granulates is in the range from 0.1 to 30 mL per kg of the salt mixture, in particular at least 10 mL/kg, and especially at least 2 mL/kg salt mixture. The water can be added before or during the press agglomeration. Generally, the approach is such that the salt mixture or a component of the salt mixture is mixed with the required quantity of water and the moist salt mixture undergoes press agglomeration. Alternatively, the approach can also be that the required water quantity is injected into the compression unit together with the salt mixture, immediately before the pressing, for example in case of the utilization of a roller press, the water is supplied, together with the dry salt mixture, to the press rollers of the machine.

The granulation process according to the invention can be carried out in an analogous manner to press agglomeration processes known from the state of the art, which are described for example in G. Heinze, Handbuch der Agglomerationstechnik, Wiley-VCH, 2000, pp. 119-170.

Preferably, the press agglomeration is effected via a compression and compacting process, where the salt mixture is compacted together with water. Preferably, the compaction is carried out with a roller press, in particular with a roller press with counterrotating rollers (e.g. flat rolling). The rollers may be smooth-wheel rollers or moulding rollers, where the latter can for example possess indents or protrusions on their surface. The compaction can be carried out in a single- or multi-stage process.

Preferably, the process according to the invention includes a compacting of the salt mixture with a roller press, with a specific force in the range from 10 to 140 kN/cm, in particular in the range from 35 to 70 kN/cm, with reference to a roll diameter of 1000 mm. In case of a roller press, the specific force is the compressive force applied on the rollers per unit of length of the roller.

The compaction of the salt mixture by means of a roller press, generally leads to flakes which are subjected to a controlled crushing in order to adjust the particle size of the granulate obtained.

The controlled crushing of the flakes obtained by press agglomeration can be carried out in a known manner, for example by grinding in milling equipment appropriate for this purpose, for example in impact crushers, impact mills or roll crushers.

Generally after the crushing a classifying of the crushed flakes follows. Hereby a separation of the crushed flakes is carried out leading to a granulate with particle sizes according to the specification, as well as a fine content and, if applicable, a coarse content. A granulate is particularly in accord with the specification when at least 90 Wt.% of the granulate particle exhibit a particle size and particle diameter in the range from 1 to 5 mm, preferably 2 to 4 mm. A possible product would exhibit a d₅₀ value = 3 mm. The classifying of the crushed flakes can be carried out in a known manner, for example by screening.

For the mechanical stability of the granulates according to the invention, it proved useful if the salt mixture, which is used for the press agglomeration, includes at least one part of the fine content resulting from classifying. Preferably the fine content amounts to 10 to 70 Wt.%, and in particular to 20 to 65 Wt.%, with reference to the total weight of the salt mixture employed.

Magnesium sulphate hydrates suitable for the process according to the invention are in particular magnesium-sulphate monohydrate and magnesium sulphate 5/4-hydrate, magnesium sulphate dihydrate and mixtures of these hydrates. Magnesium sulphate hydrates preferred for the process according to the invention, are in particular natural magnesium-sulphate monohydrate (kieserite), as well as synthetically-manufactured magnesium-sulphate monohydrate. Preferred magnesium sulphate hydrates are also mixtures in which magnesium-sulphate monohydrate (synthetic or natural) is present as a main constituent and which possibly can include further hydrates, such as magnesium sulphate 5/4-hydrate or magnesium sulphate dihydrate. Especially preferred is a content of magnesium-sulphate monohydrate in the magnesium sulphate hydrate employed of at least 80 Wt.%, with reference to the total amount of magnesium sulphate hydrate. A suitable synthetic magnesium sulphate hydrate, in particular a synthetic monohydrate, can for example be manufactured of magnesium carbonate or magnesium oxide (e. g. calcined magnesite) and concentrated sulfuric acid. This synthetic, magnesium-sulphate monohydrate can be employed after storage, but also immediately after its manufacture in the invention-related process.

If the salt mixture contains magnesium oxide this magnesium oxide may be natural or synthetic magnesium oxide, for example calcined magnesium hydroxide or calcined magnesium carbonate (e. g. magnesite) or a magnesium oxide resulting from the air oxidation of magnesium. Calcined magnesite is preferred.

In a preferred embodiment of the invention, the salt mixture, which basically consists of potassium chloride, magnesium sulphate hydrate and possibly sodium chloride, sodium sulphate, magnesite and/or magnesium oxide has a potassium content, calculated as K₂O, in the range from 35 to 50 Wt.%, preferably from 37 to 47 Wt.% and in particular from 41 to 45 Wt.%, as well as a water-soluble magnesium content, calculated as MgO(water-soluble), in the range from 2.0 to 10.0 Wt.% and in particular from 5.0 to 7.0 Wt.%, in each case with reference to the salt mixture.

In a further preferred embodiment of the invention, the salt mixture, in addition to potassium chloride and magnesium sulphate hydrate, contains in particular kieserite or synthetically produced magnesium sulphate mono-hydrate and/or magnesium sulphate 5/4-hydrate, furthermore at least one salt chosen from sodium chloride. sodium sulphate, magnesite an magnesium oxide, in particular in the form of calcined magnesite, and their mixtures. Preferred from these are salt mixtures containing magnesium oxide, especially calcined magnesite, in addition to potassium chloride and magnesium sulphate hydrate. Also preferred from these are salt mixtures containing sodium chloride in addition to potassium chloride and magnesium sulphate hydrate. Preferred from these are salt mixtures containing a mixture of sodium chloride and magnesium oxide, especially a mixture of sodium chloride and calcined magnesite, in addition to potassium chloride and magnesium sulphate hydrate. In this case, the total amount of the sodium content and/or magnesium content (water-insoluble), calculated as Na₂O and MgO (water-insoluble), is generally in the range from 0.01 to 15 Wt.%, preferably in the range from 0.1 to 11 Wt.%, in particular in the range from 0.4 to 7 Wt.%, and particularly preferred in the range from 0.6 to 5 Wt.%, with reference to the salt mixture in each case. In a special embodiemnt, the further component is sodium chloride or a mixture of sodium chloride and magnesium oxide especially a mixture of sodium chloride and calcined magnesite.
The sum of the water-soluble and the practically water-insoluble magnesium content results in magnesium (total).

Furthermore, the salt mixture used for the granulation can contain small quantities of additional fertilizer components, such as for example urea, potassium nitrate or micronutrients. The content of these further components will generally not exceed 10 Wt.%, with reference to the total weight of the salt mixture. Examples of micronutrients are in particular boron and manganese containing salts. The content of these micronutrients generally does not exceed 5 Wt.%, in particular 1 Wt.% with reference to the total weight of the salt mixture.

In a preferred embodiment of the invention, the salt mixture used for the granulation is used in particulate form and/or in powder form. It is understood here that at least 90 Wt.% of the salt mixture consists of particles which have a diameter less than 1.0 mm, and in particular less than 0.7 mm. Preferably at least 90 Wt.% of the salt mixture have a particle size in the range from 0.01 to 1.0 mm and especially from 0.02 to 0.7 mm. The d₅₀ value of the salt particles used for the granulation (mean weight of the particle size) is generally in the range from 0.05 to 0.7 mm, and in particular in the range from 0.1 to 0.5 mm. The particle sizes indicated here and in the following can be determined by screen analysis.

Generally, at least 90 Wt.% of the particulate magnesium sulphate hydrate, which is contained in the above-designated powdered salt mixture, exhibits a particle size of less than 1.0 mm and in particular less than 0.7 mm. Preferably, the size of the particles of at least 90 Wt.% of the magnesium sulphate hydrate is in the range from 0.01 to 1.0 mm and especially from 0.02 to 0.7 mm.

Generally, at least 90 Wt.% of the particulate potassium chloride, which is contained in the aforementioned powdered salt mixture, exhibit a particle size of less than 1.0 mm, and in particular less than 0.7 mm. Preferably, the size of the particles of at least 90 Wt.% of the potassium chloride is in the range from 0.01 to 1.0 mm and especially from 0.02 to 0.7 mm. The potassium chloride component can be applied in the form of potassium chloride (MOP), i.e. with 60 Wt.% of K₂O, or also in other qualities (for example 40 to 60 Wt.% K₂O).
The potassium component can be employed as potassium chloride, which also contains sodium chloride, or also in the form of mixed salts containing for example potassium and magnesium salts.

Provided that the salt mixture includes sodium chloride and/or magnesium oxide, especially calcined magnesite, the sodium chloride and magnesium oxide (water-insoluble) particles also preferably indicate particle sizes in the range designated for potassium chloride.

The granulates produced by the process according to the invention are characterized by their high mechanical stability, low dust-forming characteristics and good hygroscopic stability. Furthermore, a very high portion of the entire magnesium content of the granulates is immediately available to the plant.

The process according to the invention and the utilization according to the invention are explained in more detail by the following examples.

### Press agglomeration of potassium chloride, magnesium sulphate hydrate and calcined magnesite:

### Equipment for the testing process:

A laboratory press of the Co. Bepex, Type L200/50, was employed for the press agglomeration, which had two rollers rotating in a contradirectional direction, with rod-shaped indentations on the roller surface (roll diameter 200 mm, working width 50 mm). The laboratory press was operated with a specific compressive force of 28 kN/cm and a roll rotation speed of 6.2 rpm.

The controlled chrushing of the flakesobtained by compacting by means of the laboratory press, was carried out with an impact mill of the Co. Hazemag. The impact mill had 2 impact walls and a rotor diameter of 300 mm. The gap for the front impact wall was adjusted to 10 mm and for the rear impact wall to 5 mm. The impact mill operated with a circumferential speed of the rotor of 15 m/s.

### Analytics:

The determination of the potassium and magnesium content calculated as K₂O and MgO was carried out by means of inductively-coupled plasma-atomic-emission spectrometry (ICP-SOP).

The drying loss (at 105°C) was determined through the determination of the drying residue and the water content, according to DIN EN 12880.

For the determination of the annealing loss, the substance was covered with lead oxide, annealed at 550-600°C in the muffle furnace and the loss of weight determined gravimetrically.

A synthetically-manufactured mono and/or 5/4-hydrate (SMS) served as magnesium sulphate hydrate, with the following properties:
Magnesium content (total): 17.7 Wt.% (Mg)
Magnesium content, (water-soluble): 15.7 Wt.% (Mg)
Magnesium content, (water-insoluble): 2.0 Wt.% sulphate: 64 Wt.%
Annealing loss (at 550°C): 13.7 Wt.%
Drying loss (at 105°C): 1.3 Wt.%
pH value of a 5 Wt.% diluted solution: pH 8.8

The calculated water content amounts to 1.18 mol per mol of magnesium.

According to X-ray powder diffractometry, the main constituent is a "kieserite" (magnesium-sulphate monohydrate or 5/4-hydrate magnesium sulphate). Further components are anhydrite, hexahydrite and small quantities of magnesite, talc and quartz.

A screening resulted in the following grain size range distribution

| Grain class | Mass fraction % |
|---|---|
| > 2.0 mm | 4.7 |
| > 1.4 mm | 6.5 |
| > 1.0 mm | 6.4 |
| > 0.8 mm | 5.0 |
| > 0.5 mm | 16.5 |
| > 0.3 mm | 22.4 |
| > 0.16 mm | 27.0 |
| < 0.16 mm | 11.5 |

Alternatively, a standard kieserite I was employed as a magnesium sulphate hydrate, with the following properties:
Magnesium content (total): 16.5 Wt.% (Mg)
Magnesium content (water-soluble): 16.4 Wt.% (Mg)
Potassium content (water-soluble): 1.34 Wt.%
Grain size range distribution: 0.16 to 0.8 mm, d50 = 0.4 mm

In addition, a standard kieserite II was employed as a magnesium sulphate hydrate, with the following properties:
Magnesium content (total): 16.6 Wt.% (Mg)
Magnesium content (water-soluble): 16.5 Wt.% (Mg)
Potassium content (water-soluble): 1.36 Wt.%
Grain size range distribution: Less than 0.16 mm, d50 = 0.03 mm

A standard commercially available, dust-free potassium chloride with small quantities of anti-caking agent was employed as potassium chloride (potassium chloride I, KCl I). The potassium content of the sample was 50.2 Wt.%.. The grain size was 0.01 to 1.5 mm (d50 = 0.3 mm).

Alternatively, a fine-grained potassium chloride (potassium chloride II, KCl II) was employed, which was manufactured by grinding the standard potassium chloride. The grain size (d_{50 =} 0.3 mm, particle size < 1.4 mm).

A standard edible salt was employed as sodium chloride. The grain size was 0.7 to 0.16 mm.

General experimental details:
To the salt mixtures indicated in Tables 1 to 3 the indicated quantity of water was added and the mixture was filled into the storage container of the laboratory press. Flakes formed while compacting were then ground in the laboratory impact mill and classified by means of screens. Provided that nothing other is indicated, all experiments were carried out at ambient temperature. Where appropriate, one of the components of the salt mixture or the entire salt mixture was preheated to 100°C. Where appropriate, the fine part occurring during classification was admitted as recirculated material (=returns) to the salt mixture.

**Table 1: Type and quantity of the components employed**

| Example¹⁾ | KCl I | KCl II* | SMS | Returns | Water |
|---|---|---|---|---|---|
| V1 | 3076.8 g | -- | 923.2 g | -- | -- |
| V2 | -- | 3076.8 g | 923.2 g | -- | -- |
| 3 | 3076.8 g | -- | 923.2 g | -- | 40 ml |
| V4²⁾ | 3076.8 g | -- | 923.2 g | -- | -- |
| V5²⁾ | -- | 3076.8 g | 923.2 g | -- | -- |
| 6 | -- | 3076.8 g | 923.2 g | -- | 40 ml |
| 7 | 1538.4 g | -- | 461.6 g | 2000 g (3) ³⁾ | 40 ml |
| 8 | 1538.4 g | -- | 461.6 g | 2000 g (V2) ⁴⁾ | 40 ml |

| | | | | | |
|---|---|---|---|---|---|
| 1. V = Comparison example 2. Pre-warming of the salt mixture 3. Returns from Example 3 4. Returns from comparison Example V2 | | | | | |

**Table 2: Type and quantity of the components employed**

| Example¹⁾ | KCl I | NaCl | Kieserite I | Kieserite II | Returns | Water |
|---|---|---|---|---|---|---|
| V9 | 2666.4 g | 373.6 g | 960.0 g | -- | -- | -- |
| V10 | 2666.4 g | 373.6 g | -- | 960.0 g | -- | -- |
| 11 | 2666.4 g | 373.6 g | 960.0 g | -- | -- | 40 ml |
| 12 ²⁾ | 2666.4 g | 373.6 g | 960.0 g | -- | -- | 48 ml |
| 13 ²⁾ | 2666.4 g | 373.6 g | -- | 960.0 g | -- | 48 ml |
| 14 | 1333.2 g | 186.8 g | 480.0 g | -- | 2000 g (11) ³⁾ | 40 ml |
| 15 ²⁾ | 1333.2 g | 186.8 g | 480.0 g | -- | 2000 g (12) ⁴⁾ | 40 ml |

| | | | | | | |
|---|---|---|---|---|---|---|
| 1. V = Comparison example 2. Water was mixed with kieserite 3. Returns from Example 3 4. Returns from comparison Example V2 | | | | | | |

**Table 3: Type and quantity of the components employed**

| Example¹⁾ | KCl I | KCl II | Calc. magnesite | NaCl | SMS | Returns | Water |
|---|---|---|---|---|---|---|---|
| V16 | 2666.4 g | -- | | 410.4 g | 923.2 g | -- | -- |
| V17 | -- | 2666.4 g | | 410.4 g | 923.2 g | -- | -- |
| 18 | 2666.4 g | -- | | 410.4 g | 923.2 g | -- | 40 ml |
| 19 | -- | 2666.4 g | | 410.4 g | 923.2 g | -- | 40 ml |
| 20 | 1333.2 g | -- | | 205.2 g | 461.6 g | 2000 g (18) ⁴⁾ | 40 ml |
| 21 | -- | 1333.2 g | | 205.2 g | 461.6 g | 2000 g (V17) ⁵⁾ | 40 ml |
| 22 ^{2.3)} | 2666.4 g | -- | | 410.4 g | 923.2 g | -- | 40 ml |
| 23 | 2666.4 g | -- | | 410.4 g | 923.2 g | -- | 86 ml |
| 24 | 2666.7 g | | 205.7 g | 205.7 g | 921.8 g | -- | 86 ml |
| 25 | 2666.7 g | | 411.5 g | -- | 921.8 g | -- | 86 ml |

| | | | | | | | |
|---|---|---|---|---|---|---|---|
| 1) V = Comparison example no. V16 and V17 2) Water was mixed with kieserite 3) KCI was preheated to 100°C 4) Returns from Example 18 5) Returns from comparison Example V17 | | | | | | | |

In two further examples (Examples 24 and 25), the press granulation was carried out with a mixture of potassium chloride (potassium chloride I, KCl I), SMS (magnesium sulphate hydrate, synthetically-manufactured from magnesium carbonate and concentrated sulfuric acid), magnesium oxide, especially calcined magnesite, and possibly sodium chloride. As well as the calcined magnesite used, other magnesium oxides can also be used. To the salt mixtures indicated in Table 4 the listed quantity of water was added, and the mixture filled into the storage container of the laboratory press. The flakes formed by compacting were then crushed in the laboratory impact mill and classified by means of screens. Provided that nothing other is indicated, all experiments were carried out at ambient temperature

**Table 4: Mixture contents of the employed components**

| Components | Ex. 24 mixture content [%] | Ex. 25 mixture content [%] |
|---|---|---|
| KCl (60 Wt.%) | 66.7 | 66.7 |
| SMS | 23.0 | 23.0 |
| Magnesite | 5.1 | 10.3 |
| NaCl | 5.1 | - |
| Water | 2.2 | 2.2 |

The composition of the granulates produced according to examples 7, 8, 20, 21, 23, 24 and 25 were measured by way of an ultimate analysis performed with a wavelength-dispersive x-ray fluorescence spectrometer. The results are listed in Table 5.

**Table 5: Composition of the granulated materials produced**

| Proportions [Wt. %] | Example: | | | | | | |
|---|---|---|---|---|---|---|---|
| | 7 | 8 | 20 | 21 | 23 | 24 | 25 |
| Potassium | 38,3 | 38,2 | 33,4 | 33,4 | 33,0 | 32,8 | 32,8 |
| Magnesium | 3,98 | 4,07 | 4,03 | 3,99 | 4,00 | 6,44 | 8,97 |
| Mg, water-soluble | 3,63 | 3,75 | 3,69 | 3,66 | 3,67 | 3,51 | 3,47 |
| Sodium | 0,72 | 0,65 | 4,34 | 4,35 | 4,50 | 2,49 | 0,61 |
| Calcium | 0,18 | 0,18 | 0,21 | 0,21 | 0,22 | 0,23 | 0,24 |
| Sulphate | 13,9 | 14,1 | 14,1 | 13,9 | 14,2 | 14,5 | 14,3 |
| Drying loss | 0,7 | 0,7 | 0,6 | 0,6 | 0,8 | 1,2 | 1,3 |
| Annealing loss | 4,6 | 4,7 | 4,6 | 4,6 | 4,5 | 6,4 | 6,4 |
| K₂O (as per analysis) | 46,1 | 46,0 | 40,2 | 40,2 | 39,8 | 39,5 | 39,5 |
| MgO water-soluble (as per analysis) | 6,0 | 6,2 | 6,1 | 6,1 | 6,1 | 5,8 | 5,8 |
| K₂O (theoretical) | 46,5 | 46,5 | 40,3 | 40,3 | 40,3 | 40,0 | 40,0 |
| MgO, water-soluble (theoretical) | 6,0 | 6,0 | 6,0 | 6,0 | 6,0 | 6,0 | 6,0 |

The granulates manufactured in the examples were examined with regard to particle size, breaking strength and abrasion, as follows:
The particle sizes of the granulates were measured via screening, where the granulate particles are divided into the three fractions; larger than 5 mm, 2 to 5 mm and less than 2 mm, and the respective contents were determined in percentages by weight.

The mean breaking strength was determined 1 and 7 days after manufacture with the aid of the tablet breaking-strength tester Type TBH 425D of the company ERWEKA, on the basis of measurements on 56 individual agglomerates of different particle size.

The values for the abrasion were determined 1 and 7 days after manufacture with the aid of the tumbling drum process according to Busch.

The residual moisture was determined 1 and 7 days after manufacture with the halogen dryer Type HR 73, Fs. Mettler.

The measured values are compiled in Table 6.

**Table 6: Properties of the manufactured granulates**

| Example | Particle size fractions [Wt. %] | | | Abrasion [Wt. %] | | Break strength [N] | | Residual moisture [Wt.%] | |
|---|---|---|---|---|---|---|---|---|---|
| | >5mm | 2-5mm | <2mm | 1 day | 7 days | 1 day | 7 days | 1 day | 7 days |
| V1 | 13.4 | 21.7 | 64.9 | 60 | 60 | 21 | 21 | | |
| V2 | 22.6 | 26.6 | 50.7 | 48 | 39 | 25 | 25 | | |
| 3 | 30.6 | 21.0 | 48.3 | 32 | 20 | 24 | 31 | 0.5 | 0.3 |
| V4 | 17.4 | 30.4 | 52.2 | 46 | 28 | 28 | 29 | | |
| V5 | 10.0 | 37.9 | 52.1 | 48 | 29 | 25 | 27 | | |
| 6 | 30.0 | 21.8 | 48.2 | 33 | 22 | 29 | 30 | 0.5 | |
| 7 | 29.9 | 22.1 | 48.0 | 34 | 22 | 25 | 29 | 0.5 | 0.4 |
| 8 | 30.7 | 27.7 | 44.6 | 28 | 20 | 30 | 34 | 0.5 | 0.4 |
| V9 | 11.1 | 15.8 | 73.2 | 77 | 47 | 17 | 21 | | |
| V10 | 20.4 | 21.7 | 57.9 | 60 | 49 | 38 | 21 | | |
| 11 | 23.9 | 20.3 | 55.9 | 38 | 28 | 22 | 27 | | |
| 12 | 22.7 | 20.4 | 56.9 | 40 | 32 | 20 | 21 | | |
| 13 | 22.6 | 21.8 | 55.6 | 50 | 43 | 20 | 25 | | |
| 14 | 26.7 | 21.4 | 51.9 | 34 | 32 | 26 | 21 | | |
| 15 | 25.5 | 24.2 | 50.3 | 26 | 24 | 27 | 33 | | |
| V16 | 12.0 | 22.0 | 66.0 | 67 | 50 | 22 | 21 | | |
| V17 | 20.1 | 26.0 | 52.0 | 57 | 48 | 21 | 25 | | |
| 18 | 26.6 | 23.2 | 50.2 | 30 | 23 | 36 | 34 | 0.5 | 0.3 |
| 19 | 32.1 | 22.4 | 45.5 | 30 | 21 | 26 | 32 | 0.5 | |
| 20 | 29.8 | 22.8 | 47.4 | 30 | 23 | 26 | 32 | 0.5 | 0.5 |
| 21 | 30.6 | 24.7 | 44.7 | 29 | 19 | 29 | 28 | 0.5 | 0.4 |
| 22 | 21.4 | 23.2 | 55.4 | 48 | 30 | 23 | 26 | 0.5 | 0.6 |
| 23 | 20.3 | 24.4 | 55.3 | 22 | 18 | 30 | 36 | 0.8 | 0.5 |
| 24* | 38.7 | 27.5 | 33.8 | 15 | 8 | 36 | 48 | 0.7 | 0.8 |
| 25* | 37.3 | 26.7 | 36.0 | 18 | 9 | 36 | 43 | 0.8 | 1.0 |

| | | | | | | | | | |
|---|---|---|---|---|---|---|---|---|---|
| * For Ex. 24 and Ex. 25 abrasion, breaking strength and residual moisture were additionally measured after 14 days: Ex. 24: abrasion [% by weight]: 5, breaking strength [N]:53, residual moisture [% by weight]: 1.1 Ex. 25: abrasion [% by weight]: 5, breaking strength [N]:56, residual moisture [% by weight]: 1.6 | | | | | | | | | |

From the data listed in Table 6, it can be seen that the granulates, manufactured by the process according to the invention, in comparison with the comparison examples, exhibit partly better and/or similar breaking strengths, and furthermore considerably improved abrasion values. They are thus far more stable in total.

## Claims

1. Process for the manufacture of granulates from a salt mixture, which basically consists of potassium chloride, magnesium sulphate hydrates and possibly one or more salts selected from sodium chloride, sodium sulphate, magnesite and magnesium oxide, in which the potassium content, calculated as K₂O, is in the range from 35 to 50 Wt.% and the content of magnesium, calculated as MgO (water-soluble), is in the range from 2 to 10 Wt.%, with reference to the salt mixture in each case, including the granulation of the salt mixture through press agglomeration, where water is added to the salt mixture before or during press agglomeration,
where the total amount of magnesium sulphate hydrate, potassium chloride and, if applicable, sodium chloride, sodium sulphate or magnesite or magnesium oxide constitutes at least 95 Wt.%, of the salt mixture, and
where the quantity of added water is in the range from 0.1 to 30 mL per kg of the salt mixture.

2. Process according to Claim 1, where the total amount of magnesium sulphate hydrate, potassium chloride and, if applicable, sodium chloride, sodium sulphate or magnesite or magnesium oxide constitutes at least 99 Wt.%, of the salt mixture.

3. Process according to Claim 1 or 2, where the press agglomeration includes a compacting of the salt mixture with a roller press.

4. Process according to Claim 3, where the press agglomeration includes a compacting of the salt mixture with a roller press with a specific force in the range from 10 to 140 kN/cm.

5. Process according to Claim 3, where the press agglomeration includes a compacting of the salt mixture with a roller press and a subsequent controlled crushing and classifying of the flakes formed by compacting.

6. Process according to Claim 3, where the fine content which results from classifying of the crushed flakes is added to the salt mixture.

7. Process according to Claim 6, where the quantity of fine content amounts to 10 to 70 Wt.% of the salt mixture.

8. Processes according to Claim 1 or 2, where the magnesium sulphate hydrate is selected from magnesium-sulphate monohydrate, magnesium sulphate 5/4-hydrate and magnesium sulphate dihydrate and mixtures of these hydrates.

9. Processes according to Claim 1 or 2, where a powdered salt mixture is used for the granulation.

10. Process according to Claim 7, where at least 90 Wt.% of the magnesium sulphate hydrate in the powdered salt mixture exhibits a particle size in the range from 0.01 to 1.5 mm.

11. Process according to Claim 8, where at least 90 Wt.% of the potassium chloride in the powdered salt mixture exhibits a particle size in the range from 0.01 to 1.5 mm.

12. Process according to Claim 1 or 2, where the salt mixture includes 0.1 to 11 Wt.% of sodium chloride, calculated as Na₂O, or 0.1 to 11 Wt.% magnesium oxide or a mixture of these.

13. Process according to any of the preceding claims, where the salt mixture includes 0.6 to 5 Wt.% of sodium chloride, calculated as Na₂O.

14. Process according to any of the preceding claims, where the salt mixture has a potassium content, calculated as K₂0, in the range from 41 to 45 Wt.% with reference to the salt mixture.

15. Process according to any of the preceding claims, where the salt mixture has a potassium content, calculated as K₂0, in the range from 41 to 45 Wt.%, as well as a water-soluble magnesium content, calculated as MgO(water-soluble), in the range from 5.0 to 7.0 Wt.%, in each case with reference to the salt mixture.

## Patentansprüche

1. Verfahren zur Herstellung von Granulaten aus einem Salzgemisch, das im wesentlichen aus Kaliumchlorid, Magnesiumsulfathydraten und gegebenenfalls einem oder mehreren Salzen, ausgewählt aus Natriumchlorid, Natriumsulfat, Magnesit und Magnesiumoxid besteht, wobei der Kaliumgehalt, gerechnet als K₂O, im Bereich von 35 bis 50 Gew .-% liegt und der Anteil an Magnesium, gerechnet als MgO (wasserlöslich), im Bereich von 2 bis 10 Gew .-% liegt, jeweils bezogen auf die Salzmischung, einschließlich der Granulierung des Salzgemisches durch Pressagglomeration, wobei dem Salzgemisch vor oder während des Pressagglomierens Wasser zugesetzt wird,
wenn die Gesamtmenge an Magnesiumsulfathydrat, Kaliumchlorid und gegebenenfalls Natriumchlorid, Natriumsulfat oder Magnesit oder Magnesiumoxid mindestens 95 Gew .-% der Salzmischung ausmacht,
und wobei die Menge an zugesetztem Wasser im Bereich von 0,1 bis 30 ml pro kg der Salzmischung liegt.

2. Verfahren nach Anspruch 1, wobei die Gesamtmenge an Magnesiumsulfathydrat, Kaliumchlorid und gegebenenfalls Natriumchlorid, Natriumsulfat oder Magnesit oder Magnesiumoxid mindestens 99 Gew .-% des Salzgemisches ausmacht.

3. Verfahren nach Anspruch 1 oder 2, wobei die Pressagglomeration ein Kompaktieren der Salzmischung mit einer Walzenpresse umfasst.

4. Verfahren nach Anspruch 3, wobei die Pressagglomeration ein Kompaktieren der Salzmischung mit einer Walzenpresse bei einer spezifischen Kraft im Bereich von 10 bis 140 kN/cm umfasst.

5. Verfahren nach Anspruch 3, wobei die Pressagglomeration ein Kompaktieren der Salzmischung mit einer Walzenpresse und ein anschließendes kontrolliertes Zerkleinern und Klassieren der beim Kompaktieren erhaltenen Schülpen umfasst.

6. Verfahren nach Anspruch 3, wobei der Feingehalt, der beim Klassieren der zerkleinerten Schülpen anfällt, der Salzmischung zuugesetzt wird.

7. Verfahren nach Anspruch 6, wobei die Menge an Feinanteil 10 bis 70 Gew .-% der Salzmischung ausmacht.

8. Verfahren nach Anspruch 1 oder 2, wobei das Magnesiumsulfat-Hydrat ausgewählt ist aus Magnesiumsulfat-Monohydrat, Magnesiumsulfat-5/4-Hydrat und Magnesiumsulfat-Dihydrat und Gemischen dieser Hydrate.

9. Verfahren nach Anspruch 1 oder 2, wobei zur Granulierung eine pulverförmige Salzmischung eingesetzt wird.

10. Verfahren nach Anspruch 7, wobei wenigstens 90 Gew .-% des Magnesiumsulfat-Hydrats in der pulverförmigen Salzmischung eine Partikelgröße im Bereich von 0,01 bis 1,5 mm aufweisen.

11. Verfahren nach Anspruch 8, wobei wenigstens 90 Gew .-% des Kaliumchlorids in der pulverförmigen Salzmischung eine Partikelgröße im Bereich von 0,01 bis 1,5 mm aufweisen.

12. Verfahren nach Anspruch 1 oder 2, wobei die Salzmischung 0,1 bis 11 Gew .-% Natriumchlorid, gerechnet als Na₂O, oder 0,1 bis 11 Gew .-% Magnesiumoxid oder ein Gemisch aus diesem enthält.

13. Verfahren nach einem der vorgenannten Ansprüche, wobei das Salzgemisch 0,6 bis 5 Gew .-% Natriumchlorid, gerechnet als Na₂O enthält.

14. Verfahren nach einem der vorgenannten Ansprüche, wobei das Salzgemisch einen Kaliumgehalt, gerechnet als K₂O, im Bereich von 41 bis 45 Gew .-%, bezogen auf das Salzgemisch aufweist.

15. Verfahren nach einem der vorgenannten Ansprüche, wobei das Salzgemisch einen Kaliumgehalt, gerechnet als K₂O, im Bereich von 41 bis 45 Gew .-% sowie einen wasserlöslichen Magnesiumgehalt, gerechnet als MgO (wasserlöslich) im Bereich von 5,0 bis 7,0 Gew .-% aufweist, jeweils bezogen auf die Salzmischung.

## Revendications

1. Procédé selon la revendication de granulés à partir d'un mélange de sels, constitué essentiellement de chlorure de potassium, d'hydrates de sulfate de magnésium et éventuellement d'un ou de plusieurs sels choisis parmi le chlorure de sodium, le sulfate de sodium, la magnésite et l'oxyde de magnésium, dans laquelle la teneur en potassium, calculée comme suit: K2O est compris entre 35 et 50% en poids et la teneur en magnésium, calculée en tant que MgO (soluble dans l'eau), est comprise entre 2 et 10% en poids, par rapport au mélange de sels dans chaque cas, y compris la granulation du mélange de sels par pressage à la glomérisation, où de l'eau est ajoutée au mélange de sels avant ou pendant la pressage à la glomérisation,
où la quantité totale de sulfate de magnésium hydraté, de chlorure de potassium et, le cas échéant, de chlorure de sodium, de sulfate de sodium ou de magnésite ou de l'oxyde de magnésium représente au moins 95% en poids du mélange de sels, et
où la quantité d'eau ajoutée est comprise entre 0,1 et 30 ml par kg de mélange de sels.

2. Procédé selon la revendication 1, **caractérisé en ce que** la quantité totale de sulfate de magnésium hydraté, de chlorure de potassium et, le cas échéant, de chlorure de sodium, de sulfate de sodium, de magnésite ou d'oxyde de magnésium constitue au moins 99% en poids du mélange de sels.

3. Procédé selon la revendications 1 ou 2, **caractérisé en ce que** l'agglomération de presse comprend un compactage du mélange de sels avec une presse à rouleaux.

4. Procédé selon la revendication 3, **caractérisé en ce que** l'agglomération de la presse comprend un compactage du mélange de sels avec une presse à rouleaux avec une force spécifique dans la plage de 10 à 140 kN / cm.

5. Procédé selon la revendication 3, **caractérisé en ce que** l'agglomération de presse comprend un compactage du mélange de sels avec une presse à rouleaux et un concassage et une classification contrôlés ultérieurs des paillettes formées par compactage.

6. Procédé selon la revendication 3, **caractérisé en ce que** la fine teneur résultant du classement des paillettes broyées est ajoutée au mélange de sels.

7. Procédé selon la revendication 6, **caractérisé en ce que** la quantité de teneur fine va de 10 à 70% en poids du mélange de sels.

8. Procédés selon la revendications 1 ou 2, **caractérisé en ce que** l'hydrate de sulfate de magnésium est choisi parmi le sulfate de magnésium monohydraté, le sulfate de magnésium 5/4-hydrate et le sulfate de magnésium dihydrate et des mélanges de ces hydrates.

9. Procédés selon la revendications 1 ou 2, **caractérisé en ce que** on utilise un mélange de sel en poudre pour la granulation.

10. Procédé selon la revendication 7, **caractérisé en ce que** au moins 90% en poids de l'hydrate de sulfate de magnésium dans le mélange de sel en poudre présentent une granulométrie dans la plage de 0,01 à 1,5 mm.

11. Procédé selon la revendication 8, **caractérisé en ce que** au moins 90% en poids du chlorure de potassium dans le mélange de sels en poudre présentent une granulométrie dans la plage de 0,01 à 1,5 mm.

12. Procédé selon la revendications 1 ou 2, **caractérisé en ce que** le mélange de sels comprend 0,1 à 11% en poids de chlorure de sodium, calculé en tant que Na2O, ou 0,1 à 11% en poids d'oxyde de magnésium ou un mélange de ceux-ci.

13. Procédé selon l'une quelconque des revendications précédentes, **caractérisé en ce que** le mélange de sels comprend 0,6 à 5% en poids de chlorure de sodium, calculé en tant que Na2O.

14. Procédé selon l'une quelconque des revendications précédentes, **caractérisé en ce que** le mélange de sels a une teneur en potassium, calculée en tant que K20, comprise dans l'intervalle de 41 à 45% en poids, par rapport au mélange de sels.

15. Procédé selon l'une quelconque des revendications précédentes, **caractérisé en ce que** le mélange de sels a une teneur en potassium, calculée en K20, comprise dans l'intervalle de 41 à 45% en poids, ainsi qu'une teneur en magnésium soluble dans l'eau, calculée en MgO (eau -soluble), dans la plage de 5,0 à 7,0% en poids, dans chaque cas en référence au mélange de sels.
